# EUROPÄISCHE PATENTSCHRIFT

(11) **EP 1 042 154 B1**
(45) Veröffentlichungstag und Bekanntmachung des Hinweises auf die Patenterteilung: **06.05.2004**
(21) Anmeldenummer: 98962417.6
(22) Anmeldetag: 05.12.1998
(51) Int. Cl.: B61D 17/04, B62D 33/04

(54) **WANDELEMENT MIT GITTERGERÜST**
WALL ELEMENT WITH LATTICE FRAME
ELEMENT DE PAROI COMPORTANT UNE CHARPENTE SOUS FORME DE GRILLE

(30) Priorität: 22.12.1997 DE 19757203
(43) Veröffentlichungstag der Anmeldung: 11.10.2000
(73) Patentinhaber: DaimlerChrysler Rail Systems GmbH, 13627 Berlin (DE)
(72) Erfinder: HOROSCHENKOFF, Alexander, D-81373 München (DE); SCHEID, Peter, D-82380 Peissenberg (DE); SCHÄHL, Wolfgang, D-16761 Hennigsdorf (DE); FRETWURST, Thomas, D-12435 Berlin (DE)
(74) Vertreter: COHAUSZ & FLORACK
(86) Internationale Anmeldenummer: PCT/EP1998/007915
(87) Internationale Veröffentlichungsnummer: WO 1999/032342

(56) Entgegenhaltungen:
- EP-A- 0 780 279
- DE-A- 3 447 036
- DE-A- 19 538 803

## Beschreibung

Die Erfindung betrifft ein Wandelement gemäß dem Oberbegriff des ersten Anspruchs.

Ein bekanntes Wandelement dieser Art (EP 0780 279 A1) weist ein Gittergerüst auf, bei dem mehrere auf einen Kreuzungspunkt zulaufende Gerüststäbe mittels eines gemeinsamen Knotenverbinders zusammengehalten sind. Dabei sind die Enden der Gerüststäbe auf angepaßte Arme des Knotenverbinders aufgestekt. Nach dem Zusammenstecken werden die Gerüststäbe mit dem zugehörigen Knotenverbinder verklebt. Danach wird eine Außenverkleidung angeklebt. Eine Innenverkleidung wird formschlüssig am Gittergerüst gehalten.

Bei einem weiteren bekannten Wandelement (DE 38 38 686 C2) ist ein Gittergerüst aus in einer Ebene liegenden Gerüststäben gebildet, bei denen die Enden an Stoß-, Abzweigoder Kreuzungsstellen jeweils stumpf auf die zugewandte Mantelfläche des winklig dazu stehenden Gerüststabes unmittelbar aufgesetzt sind. Dabei läuft an Kreuzungsstellen ein Gerüststab ununterbrochen durch, während der oder die anderen Stäbe dieser Abzweigoder Kreuzungsstelle stumpf an den durchlaufenden Gerüststab angelegt sind. Die Verbindung der Gerüststäbe an den jeweiligen Anlagestellen erfolgt mittels Spreiz-Dübel-Verbindungen, die jeweils aus einem in das offene Ende des einen Gerüststabes eingesetzten Dübelteil bestehen und mit diesem unter Aufspreizung des Dübelteils verschraubt sind. Ein so aufgebautes Gittergerüst wird auf eine Decklage aus Faserverbundwerkstoff aufgelegt, wonach in die Hohlräume zwischen Gitterstäben wärmeund/oder schalldämmendes, eigensteifes Kemmaterial eingelegt wird. Anschließend wird auf die noch offene Seite des Gittergerüsts eine weitere Decklage aus Faserverbundwerkstoff aufgelegt. Die Verbindung der Decklagen mit dem Gerüst und dem Kernmaterial erfolgt durch Verkleben, so daß eine in sich steife, formstabile Ausführungsform erzielt ist. Von Nachteil ist bei diesem Aufbau, daß für die Herstellung der Spreiz-Dübel-Verbindungen ein hoher manueller Arbeitsaufwand erforderlich ist.

Der Erfindung liegt die Aufgabe zugrunde, bei einem Wandelement gemäß dem Oberbegriff des ersten Anspruchs Maßnahmen zu treffen, durch die auf einfache Weise ein zuverlässiges Zusammenfügen der einzelnen Gerüststäbe an ihren Stoß-, Abzweig- oder Kreuzungsstellen erreicht wird.

Die Lösung dieser Aufgabe erfolgt gemäß der Erfindung durch die kennzeichnenden Merkmale des ersten Anspruchs.

Bei der Ausbildung eines Wandelements gemäß der Erfindung werden insbesondere dann, wenn z. B. Faserverbundmaterialien für die Decklagen und metallische Gerüststäbe verwendet werden, die Arme der Knotenverbinder zumindest in der Gerüstebene flexibel jeweils an einen gemeinsamen Knotenträger angesetzt. Hierdurch werden die Knotenverbinder insbesondere im Bereich der sonst stark beanspruchten Zonen am Übergang von einem Arm zum anderen entlastet, weil sich dadurch das Gerüst in seiner Struktur entsprechend der Dehnbarkeit der Faserverbund-Decklagen anpassen kann und auch ein Ausgleich von Fertigungstoleranzen möglich ist. Für die dabei notwendige Verformbarkeit können die Arme der Knotenverbinder mittels eines Gelenkbolzens am gemeinsamen Knotenträger gelenkig angesetzt sein. Die Flexibilität zwischen Knotenträger und zugehörigen Armen kann jedoch auch mittels elastischer Bänder realisiert werden, die vorzugsweise einstückig mit dem Knotenträger und den zugeordneten Armen verbunden sind. Dabei ist es möglich, Bänder aus einem flexiblen Kunststoff einstückig in einem geeigneten Kombinationsspritzverfahren mit den aus steiferem Kunststoffmaterial bestehenden Armen und Knotenträgern einstückig herzustellen. Desweiteren können die Knoten- und Gerüststäbe aus metallischen Werkstoffen hergestellt sein.

Die Arme der Knotenverbinder weisen an ihren radialen freien Enden vorzugsweise Steckansätze auf, die an die Querschnittsform der Enden von zulaufenden Gerüststäben angepaßt sind. Insbesondere sind die Gerüststäbe als Hohlprofile ausgebildet, in welche die Steckeinsätze einzuschieben sind. Die Steckeinsätze der Arme sind dabei zweckmäßig mit radial abstehenden Anschlägen versehen, deren Höhe der Materialstärke der Gerüststäbe angepaßt ist, so daß ein stufenloser Übergang von den Gerüststäben zum jeweiligen Knotenverbinder gegeben ist und das gesamte Gittergerüst eine Ebene bildet, auf welche die Decklagen plan aufgebracht werden können. Die Gerüststäbe und die Knotenverbinder sowie auch das Kernmaterial sind im Endzustand der Wandelemente fest mit den Decklagen verklebt. Dabei bieten sich einfache Integrationsmöglichkeiten hinsichtlich des Innenraumausbaus eines damit erstellten Wagenkastens, wobei in die einzelnen Wandelemente die Wärme- und Schalldämmung durch die entsprechend ausgebildeten Kernplatten realisiert ist und die Decklagen glatte Innen- und Außenwände bei dieser Konstruktion bilden, so daß Nacharbeiten zur Veredelung der Oberflächen vermieden oder auf ein Minimum reduziert werden können. Durch die Anwendung von Knotenverbindern an jeder Stelle, an der zwei oder mehr Gerüststäbe zusammenlaufen, ergibt sich eine hohe Variabilität einer so aufgebauten Sandwich-Struktur, weil Maßanpassungen durch einfache Längenänderung der Gerüststäbe möglich sind und die Montage durch die Anwendung der Steckverbindungstechnik vereinfacht und gegebenenfalls automatisch durchgeführt werden kann.

Die Erfindung ist nachfolgend anhand der Prinzipskizzen eines Ausführungsbeispiels näher erläutert.

Es zeigen:
- Figur 1: eine Fahrzeugzelle aus mehreren in Fahrzeuglängsrichtung aneinandergesetzten Wandsegmenten,
- Figur 2: ein Wandelement in Explosionsdarstellung,
- Figur 3a: ein nicht erfindungsgemäßes starres Knotenelement, bei dem die hohen Beanspruchungen in den Ecken reduziert sind, indem Material ausgespart wurde,
- Figur 3b: ein nicht erfindungsgemäßes starres Knotenelement, bei dem die hohen Beanspruchungen in den Ecken reduziert sind, indem Material angehäuft wurde,
- Figur 4: ein Knotenelement mit über Lagerbolzen angelenkten Armen und
- Figur 5: ein Knotenelement mit elastisch angebundenen Armen.

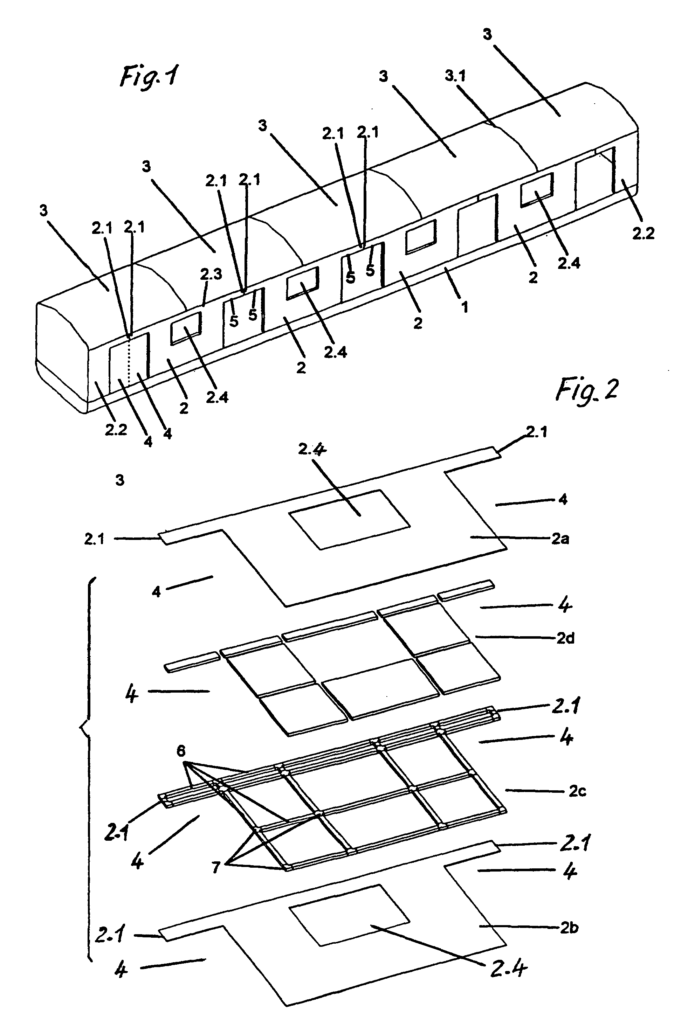

Gemäß Figur 1 ist eine Fahrzeugzelle als Wagenkasten für ein Schienenfahrzeug, insbesondere eine U-Bahn oder Straßenbahn ausgebildet und setzt sich aus einem vorzugsweise aus einem durchgehenden Bodenteil 1 mit darauf stehenden Seitenwänden aus Wandelementen 2 und die Fahrgastzelle oben abschließenden Dachwandsegmenten 3 zusammen. Mehrere in Längsrichtung der Fahrzeugzelle aneinandergefügte Wandelemente 2 bilden dabei die im wesentlichen senkrecht auf dem Boden 1 stehenden Seitenwände, wobei zusätzlich mehrere die Seitenwände oben verbindende, ebenfalls in Längsrichtung der Fahrzeugzelle aneinandergefügte Dachwandsegmente 3 als Dachwand insgesamt die Fahrzeugzelle am Umfang abschließen. Die Wandelemente 2 weisen an ihren seitlich aneinander angrenzenden Seitenkanten 2.1 jeweils Türteilausschnitte 4 auf, wie sie in Figur 1 an der linken Tür durch eine gestrichelte senkrechte Linie als Verlängerung der verbleibenden Seitenkanten 2.1 dargestellt sind. Die verbleibenden Abschnitte der Seitenkanten 2.1 liegen oberhalb der Türteilausschnitte 4, wobei die Türteilausschnitte 4 vom Boden 1 ausgehend nicht die volle Höhe der Wandelemente 2 besitzen. Die von den unteren Enden der verbleibenden Seitenkanten 2.1 ausgehenden, in die Segmentfläche des jeweiligen Wandelements 2 in waagrechter Richtung hineinlaufenden Kanten 5 der Türteilausschnitte 4 sind an benachbarten Wandelementen 2 höhengleich angeordnet und weisen zusammen eine in Fahrzeuglängsrichtung gemessene Länge auf, deren Summe einer vollen Türbreite entspricht. Eine feste Verbindung zwischen benachbarten Wandelementen 2 ist somit nur über die kurze Strecke der verbleibenden senkrechten Seitenkanten 2.1 erforderlich. Die Kanten 5 verlaufen parallel zur oberen Längskante 2.3 der Wandelemente 2.

Die Anordnung der Türteilausschnitte in den senkrechten Seitenkanten der Wandelemente 2 läßt sich gemäß Figur 2 in einem in sich sehr stabilen Aufbau aus zwei Decklagen 2a und 2b realisieren, zwischen die ein Gittergerüst 2c eingebracht ist, das zwischen seinen einzelnen Gitterstäben 6 einzelne Elemente eines wärme- und/oder geräuschdämmenden und zur Gesamtstabilität der Bauweise notwendig festes Kernmaterial 2d aufnimmt. Die Decklagen 2a, 2b sind dabei sowohl mit dem Gittergerüst 2c als auch mit dem Kernmaterial 2d fest verbunden, insbesondere verklebt. Dabei ist in diese Sandwich-Struktur zwischen zwei Türteilausschnitten 4 zumindest ein voller Fensterausschnitt 2.4 eingefügt, der ohne ein Aufbrechen der Gitterstruktur zwischen den Querstäben 6 vorgesehen ist.

Um hierbei die Wandsegmente, insbesondere die Wandelemente 2 auf einfache Weise herstellen zu können, sind die einzelnen Gerüststäbe 6 an ihren Verbindungsstellen jeweils über Knotenverbinder 7 miteinander durch Stecken und gegebenenfalls durch zusätzliches Verkleben oder Vernieten verbunden. Die Knotenverbinder 7 weisen dabei wenigstens zwei unter einem Winkel zueinander stehende Arme 8 auf, wobei sich die Anzahl der Arme und ihre Ausrichtung zueinander an der Zahl und Ausrichtung von Gerüststäben orientiert, die an der betreffenden Verbindungsstelle aufeinander zu laufen. Die Gerüststäbe 6 sind dabei insbesondere Hohlstäbe aus Metall oder Faserkunststoff, an deren Innenquerschnitt die Arme 8 der Knotenverbinder 7 angepaßt sind, wodurch Steckverbindungen geschaffen werden. Die Arme 8 weisen Steckansätze auf, die an die Querschnittsform der Gerüststäbe 6 angepaßt sind und in die zulaufenden Enden der Gerüststäbe mit enger Passung einzustecken sind.

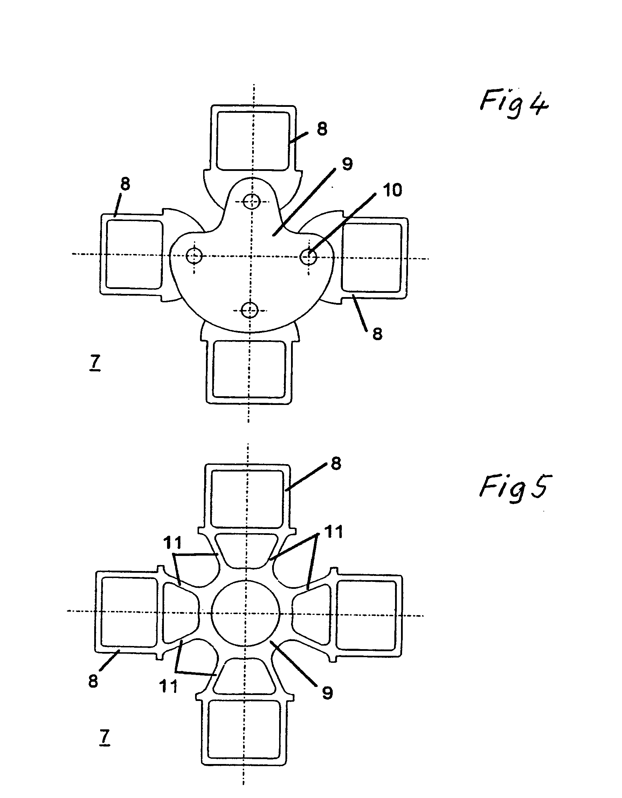

Zumindest einzelne der Arme eines Knotenverbinders 7 sind z.B. gelenkig mit einem Knotenträger 9 zu verbinden, wie es die Figuren 4 und 5 zeigen. Gemäß Figur 4 sind dabei die einzelnen Arme 8 über Lagerbolzen 10 an einem Knotenträger 9 angelenkt, während sie gemäß Figur 5 über elastische Bänder 11 am zentralen Knotenträger 9 angebunden sind. Es ist dann möglich, daß das Gittergerüst 6, 7 Dehnungen der Decklagen folgt und Toleranzen zwischen zusammengehörigen Gitterstäben 6 ausgleicht oder Gitterstäbe unter spitzen Winkeln miteinander über die Knotenverbinder 7 zu verbinden sind. Die Knotenverbinder 7 werden dabei insbesondere durch Kleben im Bereich der Steckverbindungsstellen fest mit den Gitterstäben verbunden und fügen sich ebenengleich in die durch die Gitterstäbe vorgegebene Ebene ein. Dadurch können die Decklagen 2a, 2b, die Gerüststäbe 6 und die Knotenverbinder 7 ganzflächig miteinander verklebt werden und bilden so eine in sich starre Sandwich-Struktur. Die Decklagen 2a und 2b können dabei insbesondere aus mehreren fest miteinander verbundenen Schichten bestehen, wobei die auf das Gittergerüst 6, 7 aufgebrachte innen liegende Schicht eine mechanisch hochstabile Tragschicht ist, auf welche eine Brandschutzschicht und/oder eine Dekorschicht aufgetragen ist. Dabei ist es zweckmäßig, die Decklagen 2a, 2b insbesondere an Ecken von Tür- und/oder Fensterausschnitten 4, 2.4 mit Fasereinlagerungen aus hochfesten Kohlenstofffasern zu versehen, während die übrigen Bereiche mit Glas- oder anderen Fasern gebunden sind. Die Einbringung hochfester Fasern im Eckbereich kann sich dabei auf die Tragschicht beschränken und vermindert die Gefahr von Rißbildung in den Eckbereichen.

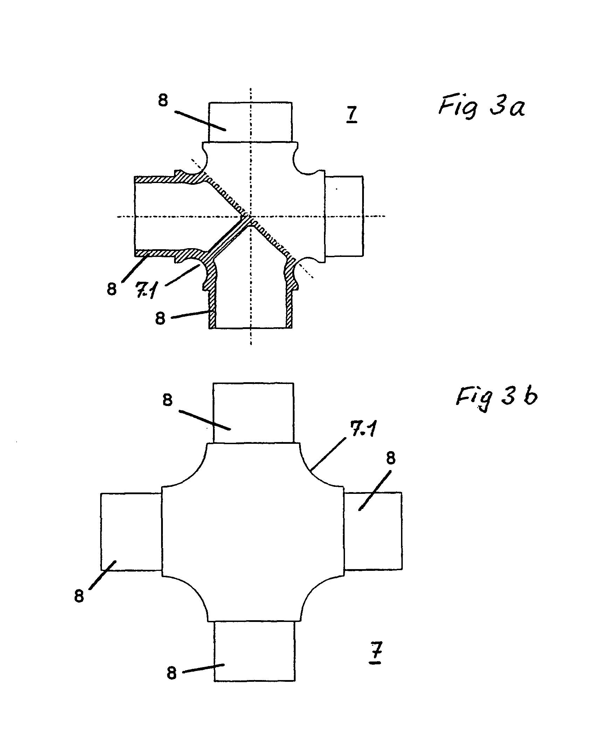

Im übrigen können die Arme 8 am Übergang von den Steckansätzen zum Gelenk 10 bzw. zum Knotenträger 9 hin mit senkrecht zu den Armen 8 abstehenden Anschlägen versehen werden, die gegenüber der Mitte des Knotenträgers 9 jeweils gleichen radialen Abstand aufweisen. Dabei ist dieser Abstand kleiner als die in gleicher Richtung gemessene radiale Länge der Arme 8 mit ihren Steckansätzen. Die Steckansätze begrenzen so das Aufschieben der zugehörigen Gerüststäbe 6 auf ein vorbestimmtes Maß, so daß Toleranzen beim Aufbau des Gittergerüsts auf ein Minimum reduziert werden. Die gelenkige oder elastische Anlenkung der Arme 8 an die zugehörigen Knotenträger 9 vermeidet Überlastungen des Knotenträgers, insbesondere am bogenförmigen Übergang zwischen benachbarten Steckarmen 8. Dabei kann der bogenförmige Übergang gemäß Figur 3 durch Verstärkung der Materialstärke zusätzlich gesichert werden. Zudem ist es zweckmäßig, die einzelnen bogenförmigen Übergänge im Inneren des Knotenträgers über sich kreuzende Stützwände zusätzlich mechanisch zu entlasten.

Daneben kann der Knotenträger 9 gemäß Figur 4 aus zwei eigenständigen Scheiben gebildet sein, zwischen welchen die Arme 8 mittels der Lagerbolzen 10 gehalten sind. Dabei können die Scheiben entsprechend der Darstellung in der oberen Hälfte mit den bogenförmigen Übergängen ausgebildet sein, wenn auf besonders geringes Gewicht Wert gelegt wird. Die Scheiben können jedoch auch gemäß der unterhälftigen Darstellung eine runde Außenkontur aufweisen, die herstellungstechnisch Vorteile mit sich bringen kann.

## Patentansprüche

1. Wandelement mit einem zwischen zwei Decklagen (2a, 2b) festgelegten Gittergerüst (2c) aus winklig zueinander stehenden oder sich kreuzenden sowie miteinander verbundenen Gerüststäben (6) und mit Kernmaterial (2d), das in Hohlräumen zwischen Gerüststäben (6) angeordnet ist, wobei die Gerüststäbe (6) jeweils an Stoß-, Abzweigoder Kreuzungsstellen enden und zwischen zusammenlaufenden Enden der einzelnen Gerüststäbe (6) ein gemeinsamer Knotenverbinder (7) eingefügt ist, der wenigstens zwei winklig zueinander stehende Arme (8) aufweist, die in Steckeingriff mit den Stirnseiten zugehöriger Gerüststäbe (6) stehen, **dadurch gekennzeichnet, daß** zumindest einzelne Arme (8) des Knotenverbinders (7) gelenkig an einen gemeinsamen Knotenträger (9) angesetzt sind.

2. Wandelement nach Anspruch 1, **dadurch gekennzeichnet, daß** zumindest einzelne Arme (8) mittels elastischer Bänder (11) an einen gemeinsamen Knotenträger (9) angebunden sind.

3. Wandelement nach Anspruch 2, **dadurch gekennzeichnet, daß** die Bänder (11) einstückig mit dem Knotenträger (9) und/oder den zugehörigen Armen (8) verbunden sind.

4. Wandelement nach wenigstens einem der vorangehenden Ansprüche, **dadurch gekennzeichnet, daß** der Knotenverbinder (7) am Übergang von einem Arm (8) zum anderen Arm (8) stufenlos bogenförmig ausgebildet ist.

5. Wandelement nach Anspruch 4, **dadurch gekennzeichnet, daß** die Übergänge eine vergrößerte Wandstärke gegenüber benachbarten Wandbereichen aufweisen.

6. Wandelement nach Anspruch 4 oder 5, **dadurch gekennzeichnet, daß** die Übergänge (13) im Inneren des hohl ausgebildeten Knotenträgers (9) über Stützwände miteinander verbunden sind.

7. Wandelement nach wenigstens einem der vorangehenden Ansprüche, **dadurch gekennzeichnet, daß** der Knotenträger (9) aus zwei parallelen Scheiben besteht, zwischen welchen die Arme (8) mittels Lagerbolzen (10) gelenkig gehalten sind.

8. Wandelement nach wenigstens einem der vorangehenden Ansprüche, **dadurch gekennzeichnet, daß** die Arme (8) Steckansätze mit radial abstehenden Anschlägen aufweisen, deren Höhe der Materialstärke der Gerüststäbe (6) angepaßt ist, so daß ein stufenloser Übergang von den Gerüststäben (6) zum jeweiligen Knotenverbinder (79 gegeben ist und das Gittergerüst eine Ebene bildet, auf welche die Decklagen (2a, 2b) plan aufgebracht sind.

9. Wandelement nach wenigstens einem der vorangehenden Ansprüche, **dadurch gekennzeichnet, daß** die Decklagen (2a, 2b) aus Faserverbundmaterial und die Gerüststäbe (6) aus Metall besstehen.

## Claims

1. A wall element with a frame (2c) that is fixed between two cover layers (2a, 2b) and consists of interconnected frame members (6) that are angled relative to or intersect one another, and with core material (2d) that is arranged in hollow spaces between the frame members (6), wherein the frame members (6) respectively end at joining, branching or intersecting points and a common junction connector (7) is inserted between converging ends of the individual frame members (6), and wherein said junction connector comprises at least two arms (8) that are angled relative to one another and engaged in a plug-type fashion with the end faces of the corresponding frame members (6), **characterized in that** at least individual arms (8) of the junction connector (7) are attached in an articulated fashion to a common junction carrier (9).

2. The wall element according to Claim 1, **characterized in that** at least individual arms (8) are coupled to a common junction carrier (9) by means of elastic bands (11).

3. The wall element according to Claim 2, **characterized in that** the bands (11) are integrally connected to the junction carrier (9) and/or to the corresponding arms (8).

4. The wall element according to at least one of the preceding claims, **characterized in that** the junction connector (7) is realized in a continuously arc-shaped fashion at the transition from one arm (8) to another arm (8).

5. The wall element according to Claim 4, **characterized in that** the transitions have a greater wall thickness in comparison with adjacent wall regions.

6. The wall element according to Claim 4 or 5, **characterized in that**, in the interior of the hollow junction carrier (9), the transitions (13) are connected to one another by means of supporting walls.

7. The wall element according to at least one of the preceding claims, **characterized in that** the junction carrier (9) consists of two parallel disks, between which the arms (8) are held in an articulated fashion by means of bolts (10).

8. The wall element according to at least one of the preceding claims, **characterized in that** the arms (8) contain projecting plug-type elements with radially protruding limit stops, the height of which is adapted to the material thickness of the frame members (6), namely such that a continuous transition is produced between the frame members (6) and the respective junction connector (7) and the frame forms a plane, on which the cover layers (2a, 2b) are placed in a planar fashion.

9. The wall element according to at least one of the preceding claims, **characterized in that** the cover layers (2a, 2b) consist of a fiber composite and the frame members (6) consist of metal.

## Revendications

1. Elément de paroi avec une ossature grillagée (2c) fixée entre deux couches (2a, 2b), laquelle ossature est constituée de barres d'ossature (6) inclinées les unes par rapport aux autres ou se croisantes et reliées ensemble, et avec du matériau central (2d) disposé dans des espaces creux entre les barres d'ossature (6), les barres d'ossature (6) se terminant respectivement en des points de jointure, de dérivation, ou de croisement, et un raccord à noeuds (7) étant inséré entre les extrémités convergentes des barres individuelles d'ossature (6), lequel présente au moins deux bras (8) situés de manière angulaire l'un par rapport à l'autre, lesquels sont en prise enfichable avec les côtés frontaux de barres d'ossature (6) associées, **caractérisé en ce que** au moins des bras (8) individuels du raccord à noeuds (7) sont fixés de manière articulée sur un support de noeud (9) commun.

2. Elément de paroi selon la revendication 1, **caractérisé en ce que** au moins des bras (8) individuels sont attachés à l'aide de rubans élastiques (11) à un support de noeud (9) commun.

3. Elément de paroi selon la revendication 2, **caractérisé en ce que** les rubans (11) sont reliés d'une seule pièce avec le support de noeud (9) et/ou avec les bras (8) associés.

4. Elément de paroi selon au moins une quelconque des revendications précédentes, **caractérisé en ce que** le raccord à noeuds (7) est réalisé en forme d'arc continu au niveau de la transition d'un bras (8) vers l'autre bras (8).

5. Elément de paroi selon la revendication 4, **caractérisé en ce que** les transitions présentent une épaisseur de paroi supérieure par rapport aux zones de parois adjacentes.

6. Elément de paroi selon l'une quelconque des revendications 4 ou 5, **caractérisé en ce que**, à l'intérieur du support de noeud (9) réalisé de manière creuse, les transitions (13) sont reliées par des parois de support.

7. Elément de paroi selon au moins une quelconque des revendications précédentes, **caractérisé en ce que** le support de noeud (9) se compose de deux disques parallèles, entre lesquels les bras (8) sont maintenus de manière articulée à l'aide de pivots (10).

8. Elément de paroi selon au moins une quelconque des revendications précédentes, **caractérisé en ce que** les bras (8) présentent des appendices enfichables avec des butées en saillie radiale, dont la hauteur est adaptée à l'épaisseur du matériau des barres d'ossature (6), de sorte qu'une transition continue des barres d'ossature (6) vers le raccord à noeuds (7) respectif est obtenue, et que l'ossature grillagée forme un plan sur lequel les couches extérieures (2a, 2b) sont appliquées à plat.

9. Elément de paroi selon au moins une quelconque des revendications précédentes, **caractérisé en ce que** les couches extérieures (2a, 2b) sont en un matériau renforcé par des fibres, et que les barres d'ossature (6) sont en métal.
